# EUROPEAN PATENT APPLICATION

(11) **EP 3 798 958 A1**
(43) Date of publication of application: **31.03.2021**
(21) Application number: 19200186.5
(22) Date of filing: 27.09.2019
(51) Int. Cl.: G06Q 30/02, G06Q 30/06

(54) **COMPUTERIZED SYSTEM AND PROCESS AND ASSOCIATED SET OF COMPUTER PROGRAMS**

(71) Applicant: The Bubbles Company, 75007 Paris (FR)
(72) Inventor: EBLE, Christophe Louis Bernard, 75009 Paris (FR)
(74) Representative: Fidal Innovation

(57) **Abstract**

The computerized system comprises a code-generation module (1) which generates participation codes. It comprises a communication module (6), which sends a code to a remote personal handheld device (7).

A resident sorter (17) receives from a registration desk (15) of a check-out system (12) a list of data with an item-related data, determines eligibility to a computerized event based on the detection of the participation code in the list of data.

Upon non-retrieval by the sorter (17) of the participation code in the list of data, the list of data is sent to a printer (16).

Upon retrieval by the sorter (17) of the participation code in the list of data, the participation code is sent to a remote event server (18), which operates a random-based determination and sends to the sorter (17) an event-related data.

## Description

### FIELD OF THE INVENTION

The present invention relates to computerized systems and processes, and associated sets of computer programs.

### TECHNOLOGICAL BACKGROUND

More precisely, the invention relates to a computerized system servicing a point of sale.

in order to develop sales in a shop, discount coupons have become increasingly popular. Typically, during a first visit in a shop, the client would receive discount coupons associated with specific products as a reward for their purchase. During a later visit in the same shop, upon buying the specific products associated with the discount coupons, and presenting the discount coupons at the desk, the client would benefit from a discounted price on said products. At the point of sale, the computerized software is adapted to print the discount coupons during the first visit. During a later visit, the computerized software is adapted to recognize the discount coupon, to identify the associated specific products amongst the purchased products, and to apply the discount before payment.

Typically, the above process pertains to a specific store. This prevents the client from using the coupon in another shop.

However, recently, there is a trend to providing such services beyond a local shop, thus enabling the user to use a coupon obtained in a first store in another. This is particularly useful to a distributor brand wanting to reward their clients regardless of where they shop. This scheme requires network communication between the shops, through a central server connected thereto. A typical example is US 2008/121,889, where the shop communicates with a remote server to handle discount coupons. More precisely, a driver software module is inserted between the point-of-sale software module and the printer. As a first step, the driver software module sends the purchase data to a remote server. The remote server analyses the purchase data and attributes a discount coupon to the purchase. The discount coupon is sent to the printer to be printed as a barcode.

As a second step, when the user passes through the point of sale with its discount coupon, obtained at a prior visit, the discount coupon is scanned, and the driver software module sends the scanned information to the distant server for authentication. In case authentication is confirmed, the discount is applied on this purchase.

This description corresponds to a typical discount coupon management scheme.

According to another example in that document, an offer may be associated with a credit card or a client card. In such a case, since it is not the remote servers themselves generating the printing of the reward on a point-of-sale printer, authentication and application of the reward is much more difficult. In such a case, the virtual printer sends a copy of the receipt data to a remote offer server and pre-authorisation code for processing the offer. However, according to this scheme, all purchase information is sent to the remote server.

Typically, points of sale operators do not welcome mass communication with remote servers, because remote servers may fail, or communication with remote servers may fail, and increased risks of failure would worsen the user experience at the point of sale. This is critical for the user, but also for the point of sale itself, which is idle during the time the driver software module attempts to communicate with the remote server. Failure might also lead to the discount coupon not being validated, which raises other complications.

The invention thus aims at smoothing the point-of-sale operation, by optimizing remote server access for user rewards.

### SUMMARY OF THE INVENTION

Thus, the invention relates to a computerized system comprising:
- a code-generating computerized module adapted to generate codes each comprising at least a participation code,
- a communication computerized module adapted to send a code generated by the code-generating computerized module to a respective remote personal handheld computerized device, the remote personal handheld computerized device comprising a communication computerized module adapted to communicate the code,
- a resident computerized sorter adapted
   - to receive from a registration desk of a check-out computerized system a list of data comprising at least one item-related data,
   - to determine eligibility to a computerized event based on the detection at least of the participation code in the list of data, and
   - to operate a computerized decision-module by which:
      + upon non-retrieval by the computerized sorter of the participation code in the list of data, sending the list of data to a printer,
      + upon retrieval by the computerized sorter of the participation code in the list of data, sending at least participation code-related data to a remote event server, receiving event-related data for the respective list of data from the remote event server, and sending the list of data and the event-related data to a printer;
- an event server adapted
   - to receive at least the participation code-related data from a computerized sorter,
   - to operate a random-based determination for the list of data to generate a respective event-related data,
   - to send to the computerized sorter said event-related data associated to the list of data.

Thus, the invention makes it possible to, for a participation code which was not generated by a printer of a point of sale, communicate with the remote server only after a local eligibility check . This would allow communication with the remote server only when it is absolutely necessary.

For example, the participation code is insertable in the list of data by the registration desk of the check-out computerized system upon communication between the registration desk of the check-out computerized system and the personal handheld computerized device.

According to various aspects, one or more of the following features may be implemented.

According to some embodiments, the communication computerized module of the personal handheld computerized device adapted to communicate the code is a display.

According to some embodiments, the sorter sends at least an item-related data of the list of data to a remote event server, further to the participation-code related data, and the event server is adapted to receive at least the item-related data from a computerized sorter.

According to some embodiments, the event server determines eligibility to a computerized event based on detection of a pre-defined further data in the list of data, and optionally the pre-defined further data comprises one or more predefined item-related data.

According to some embodiments, the code further comprises a content code, and wherein the event server is adapted to operate the random-based event based also on the content code.

According to some embodiments, the resident computerized sorter is adapted to send to the remote event server an identification of the resident computerized sorter and/or an identification of the personal handheld computerized device.

According to some embodiments, the computerized system further comprises a check-out computerized system adapted to communicate with the personal handheld computerized device to get the participation code therefrom, to insert the participation code in the list of data, and to send the list of data with the inserted participation code to the resident computerized sorter.

According to some embodiments, the check-out computerized system comprises an optical scanner to get the participation code from the personal handheld computerized device.

According to some embodiments, the code-generating module is adapted to upload user identification data in a database, wherein the event server operates the random-based event based at least on the database.

According to some embodiments, the computerized system further comprises a printer adapted to either print the list of data or the list of data and the event-related data.

According to some embodiments, the computerized system further comprises a final acquisition system adapted to detect the event-related data on a print-out from the printer.

According to another aspect, the invention relates to a computerized process comprising:
- a code-generating computerized module generates codes each comprising at least a participation code,
- a communication computerized module sends a code generated by the code-generating computerized module to a respective remote personal handheld computerized device,
- a communication computerized module of the remote personal handheld computerized device communicates the code to a check-out computerized system,
- a resident computerized sorter receives from the check-out computerized system a list of data comprising at least one item-related data, determines eligibility to a computerized event based on the detection at least of the participation code in the list of data, and operates a computerized decision-tree by which:
   + upon non-retrieval by the computerized sorter of the participation code in the list of data, the resident computerized sorter sends the list of data to a printer,
   + upon retrieval by the computerized sorter of the participation code in the list of data, the resident computerized sorter sends at least participation code-related data to a remote event server,
- an event server receives at least the participation code-related data from the computerized sorter, operates a random-based determination for the list of data to generate a respective event-related data, and sends to the computerized sorter said event-related data associated to the list of data,
- the computerized sorter receives event-related data for the respective list of data from the remote event server, and sends the list of data and the event-related data to a printer.

According to another aspect, the invention relates to a set of computer programs comprising instructions which, when the computer programs are executed by computers in a distributed environment, cause the computers to carry out this computerized process.

### BRIEF DESCRIPTION OF THE DRAWINGS

Embodiments of the invention will be described below, in relation to the following drawings :

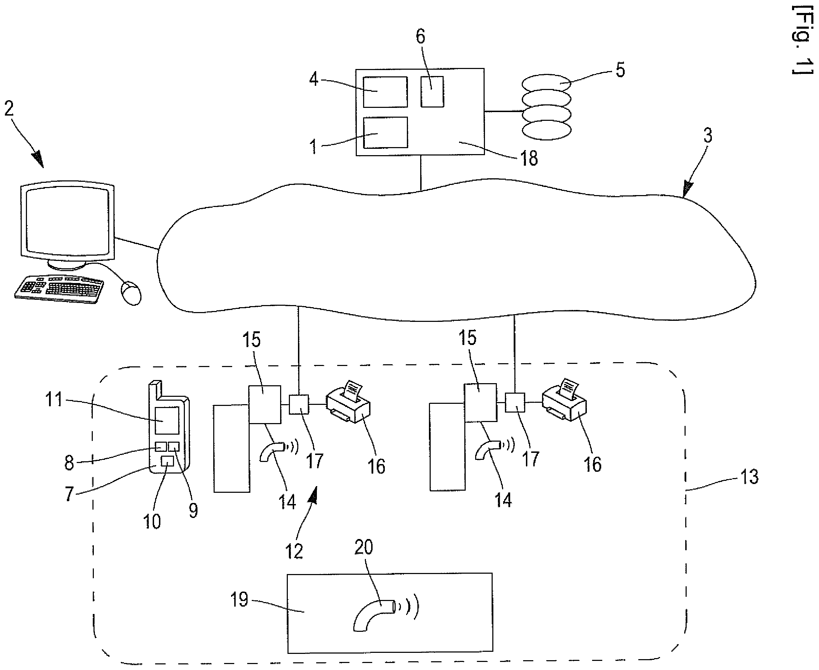

Fig. 1 shows a schematic view of a system.
Fig. 2 shows a first example of a user using the system.
Fig. 3 shows a second example of a user using the system.

On the drawings, the same reference signs show the same or similar objects.

### DETAILED DESCRIPTION

The embodiments described here refer to a shop, also known as a "point-of-sale". The word "remote" is used here by reference to the internal computerized network (intranet) of this shop. In particular, the embodiments described here use two kinds of "remote" systems. A first "remote" system is the remote server. Communication between the shop and the remote server is performed through a suitable network, such as the internet. In particular, the remote server is dedicated to servicing various shops of a same group of shops, or various groups of shops. The remote server itself may be centralized or distributed over the network. Another kind of "remote" systems are user mobile phones. User mobile phones are "remote" systems according to the present embodiments, since they are not part of the computerized system of the shop. Even though, during use of the invention, the mobile phones of the user would typically be located inside the shop. Computerized elements inside the computerized system of the shop are not "remote". Communication between them can be performed in any suitable way such as, for example, wiredly, through a wireless local network. The word "resident" is used to designate computerized systems which are internal to the shop's computerized system.

A "point-of-sale" may comprise one or more check-out systems. A check-out system processes users sequentially. A check-out system typically comprises a registration desk, to register the items a given user 23 wishes to buy as well, when appropriate, as other information, as will be detailed below, a payment system, enabling the user to pay for their purchases, for example by credit card, and a printer for printing a receipt for the client.

A first embodiment will be described below.

The computerized system comprises a server 18. The server comprises computerized modules, such as a code-generating module 1 adapted to generate codes according to specific formats which will be described below. The server accesses a user database 5, and is adapted to both read information in the user-database, and record information in the user database. The information type will be described further below. The server further comprises a first communication module adapted for communication with remote sorters installed in points-of-sale, according to a scheme described further below. The server further comprises a second communication module 6 adapted for communication with remote personal communication user devices, according to a scheme described further below.

The computerized system may comprise a website 4 which is structured to allow users to register information. The website 4 is accessible through the Internet network 3 to the users through their personal computer 2. Registered information will be stored in the database mentioned above.

The computerized system may comprise remote personal handheld computers or mobile phones 7. These remote personal handheld computers may comprise a first communication module 8 adapted to communicate with the remote server. Further, these personal handheld computers might comprise a second communication module 11 adapted to communicate with a suitable check-out system of the point-of-sale.

A point-of-sale 13 comprises a plurality of computerized check-out systems where bought items are registered and paid. A check-out system 12 comprises a registration desk 15, for registering items being bought, and a printer 16 to receive data from the registration desk 15 and print the receipt corresponding to the purchase. The computerized system comprises a computerized sorter 17 installed between the check-out system 12 and the printer 16. The check-out system comprises a first communication module adapted to communicate with the personal handheld computers. The check-out system 12 further comprises a second communication module adapted to communicate with the computerized sorter 17. The sorter 17 is adapted to communicate with the event server in both ways. Further, the sorter 17 is adapted to communicate with the printer 16. Further, the point-of-sale 13 comprises a central cashier or information desk 19 adapted to process paper or virtual receipts generated by the check-out systems 12. This involves a final acquisition system 20 to read these receipts.

A user accesses to a code-generating computerized module 1 in order to obtain a code generated by the code-generating computerized module. For example, the access is performed through an internet website that the user accesses from a personal computer 2 through the Internet network 3. The Internet website 4 comprises a log-in page enabling the user to log-in using identification. User identification is associated to user personal data stored in a database 5. If the user does not yet have user identification, he is taken through a registration process through which he shares user personal data then stored in the database. User personal data may include at least the following information:
- user identification,
- user communication means, such as postal address, mobile phone number or email address,
- code-generation information.

Code-generation information may be empty if the user currently does not have any unused generated code, or may comprise a previously-generated code.

In addition, the database may comprise historical data of code generation to the user. In other embodiments, the database may not comprise historical data of code generation to the user for terminated events (i.e. events for which the event end date is a past date).

Upon identification of the user on the internet website, the code-generating computerized module 1 generates a code for the user. The code-generating module 1 may preliminarily check whether the user already generated one or more codes for this event. According to one embodiment, the code-generating module 1 might run an exception routine if the user already generated more than a pre-defined number of codes, or more than a predefined number of yet unused codes, for the event. The exception routine might display an alternative page of the website informing the user that he may not access code generation at the time.

A code generated by the code-generating computerized module 1 may comprise at least a participation code, which is a code which represents the fact that the user takes part in the present system. The code-generating computerized module 1 may also comprise at least an event participation code, which represents a particular current event. The code-generating computerized module may also comprise at least a user code, which represents the user himself. The code-generating computerized module may also comprise at least another code, which represents other information, if appropriate. The various codes might be juxtaposed or mixed according to any specific key or function. Generally speaking, the part of the code beyond the participation code is called the content code.

A communication module 6 is adapted to send the code. The code may be sent in any suitable format, such as numeric, alpha-numeric, binary, bar code, QR-code, or a combination of some of these. The communication module may comprise a computerized module adapted to send the code to the user by email to the email address of the user registered in the database. Alternately, the computerized communication module is adapted to send the code to the user as a short text message, and/or multi-media short message to the mobile phone registered for the user in the database. Alternately, the communication module is adapted to print the code so that the printed support may be sent by post to the postal address registered for the user. In the present example, we will describe the embodiment where the computerized communication module sends the code to the user as an image comprising both a bar-code and an alpha-numeric equivalent in a MMS format to a mobile phone of the user.

The user 23 typically owns a mobile phone 7 adapted to receive the code. The mobile phone may therefore comprise a communication module 8 adapted to communicate with remote devices. It may also comprise a processor 9 and a memory 10 adapted to store data. The processor 9 is adapted to run computer programs. The processor 9 is thus adapted to receive the code sent by the remote computerized communication module 6, and to store the code in the memory 10. The mobile phone 7 may also comprise a communication module 11 adapted to communicate the code to a receiver. This communication module 11 may comprise a display adapted to display the code in suitable format. For example, if the code was received as an image, the display may be able to display the image. The memory 10 may further store an application program dedicated to the management of codes according to the invention. The application program may be run on the processor 9. The application program may enable to display the code on the display of the mobile phone. It may also offer other functions, such as browsing through codes or deleting codes from the memory.

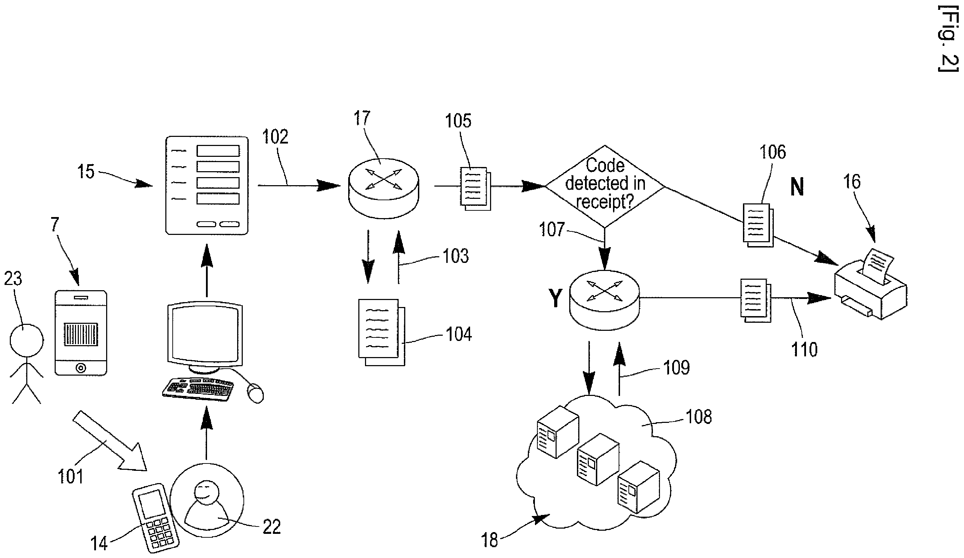

As shown on Fig. 2, the user 23 is to use the code at a check-out system 12 of a shop 13. In the present example, we will consider a human-operated check-out system 12. Typically, in the shop 13, the user is purchasing a plurality of items, and goes to the check-out system 12 in order to pay the items. Typically, the check-out computerized system 12 comprises an optical scanner 14 adapted to read barcodes of items to be sold in the shop. The optical scanner 14 may typically also be used to read barcodes of discount coupons or personal user cards or the like. At any time before the cashier 22 decides to proceed to the payment function, for example before scanning the first item, or after scanning the last item, the user 23 will cause the code to be communicated to the check-out system 12, for example by having the code displayed on the display of their mobile phone 7, and will let the barcode to be read by the optical scanner 14. The optical scanner 14 reads 101 the barcode associated with the code on the display of the mobile phone 7 of the user, and treats it as an item. In case of error in reading the barcode, the check-out computerized system 12 offers an option for the cashier to seize the alpha-numeric version of the barcode at the check-out system 12. This option is typical already of the computerized check-out system 12, and is used when the scanner fails reading the barcode of an item. It will not be more detailed here.

When all items are registered at the registration desk 15 of the check-out system 12, the cashier 22 typically proceeds the client to payment. This step is also typical of the check-out system 12, and will not be described in more detail here. The price of the item associated with the code read from the mobile phone of the client is zero. At this stage, the code read from the mobile phone of the client does not convey any price discount on the final payment for the user 23. However, this could be possible.

When payment is completed, the content of the receipt is sent 102 to the printer 16 of the check-out system 12 to be printed. The content of the receipt will typically comprise data such as receipt identification, date and time, user identification, operation identification, a number of items, a VAT-including and/or VAT-excluding subtotal (summing up all item prices before applying any discount), one or more tax amounts, a payment solution, a paid amount and a change amount. It will also comprise a list of items and, for each item, an item identification, a unit price, a quantity, and a total price. The virtual sorter 17 of the check-out system 12, installed between the registration desk 15 of the check-out system 12 and the printer 16 of the check-out system 12 intercepts the receipt data sent to the printer 16 and applies a conversion 103 of this data into text data 104. For example, the receipt data is sent to the printer 16 in binary or ASCII format, for example in ESC/POS format, and the virtual sorter 17 recognizes pre-defined descriptors in this file, and translates the binary data following the recognized descriptor into text data. The data following the descriptor corresponds to data associated to the descriptor in the receipt. According to one example, if the file comprises an ASCII code "bht68f" which is known to represent a new item in the receipt data, and a code "eht68f", which is known to represent the end of an item data in the receipt data, the virtual sorter is programmed to recognize these strings of characters, and to convert the intermediate data into text data. This scheme can be applied to any of the encoded information in the receipt data. This text data will therefore comprise text data related to the items bought by the client (nature, quantity, price, unit price, ...), text data related to the code, and other text data related, for example, to a user identification code at the shop, discounts applied at the point-of-sale, total price, currency, payment data, ...

After conversion, the virtual sorter 17 performs a search 105 for the participation code of the code in the text data. Indeed, with the above scheme, the participation is considered as an item in the receipt. Hence, the virtual sorter 17 is pre-configured with one or more participation codes, and searches for these participation codes in the text data. In the present example, we will consider that a single participation code is pending, and corresponds to a current event.

Searching may be performed under various alternative schemes. According to one example, the virtual sorter 17 browses through the text data searching for the first character of the code. If a character is different from the first character of the code, the virtual sorter continues with the next character. If a character is equal to the first character of the code, the virtual sorter compares the following k-1 characters of the text data with the k-1 other characters of the code, where "k" represents the number of characters of the code. If the following characters are different from the code, the virtual sorter resumes browsing. If the following characters are identical to the participation code, then the search is positive. According to one embodiment, as soon as the search is positive, the browsing is stopped.

In most cases, the participation code will not be recognized in the text data, simply because the user 23 did not participate in the operation, did not receive any code, did not have their mobile phone with them, or will not have the code scanned or elsewise entered by the cashier into the registration desk of the check-out system, because they forgot to, or they didn't want to. When the virtual sorter 17 does not retrieve 106 the participation code in the text data, then the receipt data is forwarded to the printer 16, so that the receipt be printed by the printer 16 in a typical way.

Assuming, for example, that 1% of the shop customers are taking part in the operation, this means that, for 99% of the customers, the burden of the operation is only a local text conversion and search for a string of characters, which is very fast.

If the virtual sorter 17 retrieves 107 the participation code in the text data, the virtual sorter 17 establishes a communication with the remote event server 18. The communication is established through the Internet. According to one embodiment, the whole code is sent to the remote event server 18. The virtual sorter 17 is programmed to recognize the full code in the text data after it recognized the presence of the participation code in the text data. For example, the virtual sorter 17 is programmed to identify, as the whole code, a group of alpha-numeric characters comprising a predefined number of characters before and/or after the participation code. In other variants, the virtual sorter 17 might process the code into participation-code related data which is sent to the remote event server 18.

The remote event server 18 is programmed to receive the code from the virtual sorter 17. The event server 18 matches the code with one user identity registered in the database 5. This is done for example by using the user code which is part of the whole code, which was previously stored associated with the user in the database 5 when the code was generated. The event server 18 registers in the database 5 that the code was used by the user. The event server 18 associates the code with the user in the database 5. If the database 5 indicates that the user does not have a valid code for an event available, an exception routine will be processed. This would be the case, for example, if the shop does not participate in this event, if the current time is outside of the event period, if the code does not correspond to a code valid for a current event, ... In such case, the event server 18 will send a message to the virtual sorter 17 to be appended at the end of the printed receipt. The message might be associated to the exception. The message might comprise a text string indicating the code is not valid. To the contrary, the event server 18 modifies the code-generation information associated with the user in the database 5, to register in the database 5 the information that the code is being used by the user. This may prevent the user to later using this code again, even in another point-of-sale.

The event server 18 operates 108 a random-based determination for the code. For example, the determination provides a result. The result is for example a Boolean result. The event comprises a given probability for each value of the result. In the case of a Boolean result, for instance, the probability of a value of the result being equal to "1" is of 5%, and the probability of a value of the result being equal to "0" is of 95%.

In the frame of the present communication between the virtual sorter 17 and the event server 18, result-related content is stored in the database. If the event includes a probability calculation, it might be useful to store all past event results, in order to ensure, and to justify the accurateness of the probability calculation for the event. Further, result-related content is sent by the event server 18 to the virtual sorter 17. Result-related content may be the value of the result itself (i.e., in the present example, a bit "0" or "1"), or other content which is associated with the result in the event server. The virtual sorter 17 receives 109 the result-related content from the event server 18 and adds it to the content of the receipt, or processes it to determine a content to be added to the content of the receipt. The virtual sorter 17 sends 110 the content of the receipt together with the result-related content to the printer 16 for printing. For example, the result-related content may comprise a string of alpha-numeric characters and/or a readable barcode or QR code.

The printed document, comprising the receipt and the result-related content may be brought by the user 23 to a central cashier or information desk 19 for further processing. The further processing will depend on the result-related content. The central cashier 19 may be equipped with a final acquisition system 20 to read the printed result-related content. The further processing may involve a total or a partial refund of the user by the total amount of the receipt, depending on the printed result-related content. The central cashier 19 may comprise a system to perform this refund.

According to the example above, the code is sent to the remote event server 18 by the virtual sorter 17, which operates the determination based on the code. According to another embodiment, the virtual sorter 17 sends additional data to the remote event server 18. Additional data may include one or more of the following data:
- Item data, including one or more of item identification, quantity, individual price and total price,
- User identification, such as customer identification obtained from a fidelity card,
- Total amount of the receipt,
- Check-out identification,
- Point of sale identification,
- Coupons data such as identification, related item, amount, time and date,
- Identification of the resident computerized sorter,
- Identification of the personal handheld computerized device.

This data is transferred from the text data generated at the virtual sorter 17.

According to the present example, the additional data is stored by the event server 18 in the database, and is associated with the user.

According to the example, eligibility to the event is determined based on the verification of the code. According to another example, eligibility to the event is determined based on the verification of the code and further based on additional data. Text data is thus sent to the event server 18 for the eligibility test. In other words, eligibility to the event is a two-step process. The first step is processed at the virtual sorter 17, and comprises recognition of the participation code. The second step is processed at the event server 18, and comprises recognition of the further additional data. This second step might be unknown to the virtual sorter 17, which sends all text data information to the remote event server 18 upon recognition of the code. The event server 18 is adapted to recognize a predefined string of characters in the text data. Eligibility to the event is acknowledged under the conditions that the code is recognized and the predefined data is recognized. For example, eligibility is based on the recognition of the code and an item identification. According to another example, eligibility is based on the recognition of the code and a total amount of the receipt being compared to one or more predefined thresholds. According to this example, if eligibility is not passed, the event server 18 operates an exception routine. This may include sending a suitable related message to the virtual sorter 17 for printing on the receipt,as described above. Alternately, once eligibility is passed, the determination is operated as described above, and the following steps of the process are as described above.

According to another example, which is compatible with either of the above examples, the determination itself may be a random determination taking into further consideration the additional data. Hence, the determination is "random" as soon as some randomness is integrated in the determination. For example, the outcome of the random determination will be different, depending on the additional data. According to one example, the probability law of the result of the random determination may depend on the total amount of the receipt. Any kind of function may be used, such as a linear function, a stepwise function, an increasing function, a decreasing function, ... of the total amount.

According to another example, the result of the determination will also depend on the total amount of other receipts. Especially, the event might be parametrized to take into account a total amount of rewards. Thus, the probability law will also include as a parameter the targeted total amount of rewards. The current amount of rewards and of participating receipts for the event might be calculated by summing the amount of past determinations for the event, depending on their result. More precisely, the event server will sum the total amounts indicated for all receipts which participate in the event, and will also sum the total amounts indicated for all receipts for which a given result of the determination was obtained. These two data, or their ratio, might be used in the determination. For example, the probability law will be determined so that the summed total amounts for all receipts for which a given result of the determination was obtained will be a predetermined percentage of the summed total amounts for all receipts.

According to one example, the probability law of the result of the random event may depend on the presence of a given item data in the receipt. For example, the probability of one value of the result will be higher in case a specific item identification is recognized from the additional data.

The above three examples may be combined in complex probability laws for determining the result based on text data.

According to the above examples, it should be noted that the code itself does not convey the information as to the result of the determination. The code is used for eligibility to the event, and may also comprise information used for processing the determination, but the determination is a random-based determination.

According to the example above, the code held by the user comprises the information related to the eligibility to the event, and may comprise additional information used for the determination itself.

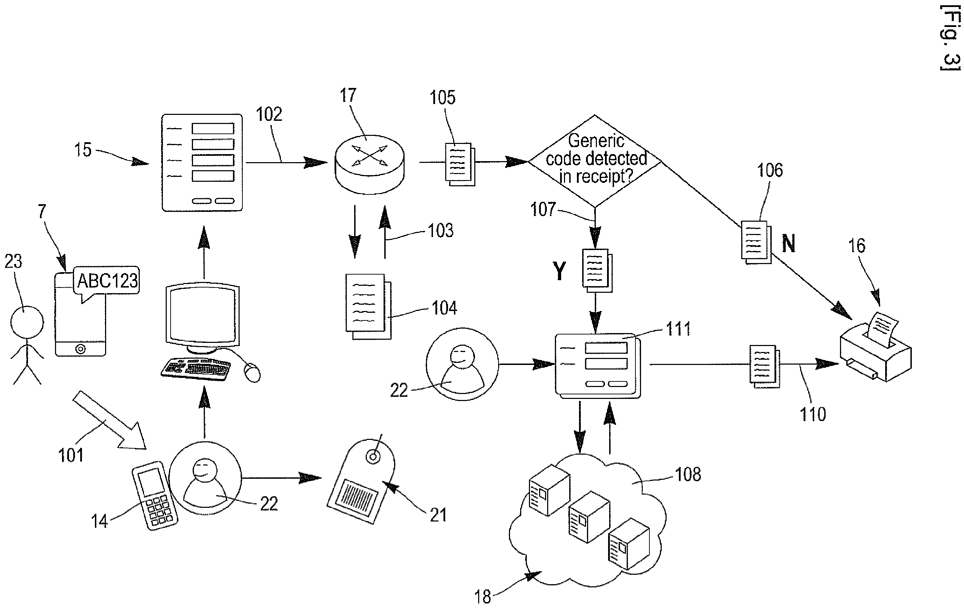

According to another example, as shown on Fig. 3, the code held by the user may not comprise information related to eligibility to the event. According to the present example, the system may comprise an additional device 21 embedding the eligibility information. For example, the additional device is held by the cashier 22. According to this embodiment, if the cashier considers that the user 23 is eligible, or is likely to be eligible to the event, the cashier will seize this information. For example, the eligibility information is seized during the time where the user is passing their items at the check-out system. The additional device may for example be a device bearing a barcode which is readable by the optical reader of the check-out system. Thus, the cashier will scan the additional device, as if it were an item, and this information is entered into the receipt.

According to this embodiment, the virtual sorter 17 will recognize, in the receipt data, the participation code. If the participation code is recognized, the virtual sorter runs a process 111 enabling the user 23 to seize a personal code into the virtual sorter. For example, the virtual sorter controls the display of a window on the screen of the check-out system, and enables someone (the user or the cashier) to seize additional data into the virtual sorter through a keyboard. The additional data is for example part of the code held by the user, the display of which caused the cashier to register eligibility to the event for the user. The additional data may be seized into the virtual sorter by any other suitable means, such as, for example, scanning a barcode displayed on the mobile phone of the user with the optical scanner 14 of the check-out system, or even direct wireless near-field communication between the mobile phone of the user and the registration desk of the check-out system or the virtual sorter, or else. The additional data comprises at least user identification data which enable the remote event server to associate the participation to the event with the user.

Hence, the code recognized by the virtual sorter 17 will comprise a participation code, but the participation code is in fact entered by the cashier themselves.

The examples above refer to a human cashier. However, the invention may be implemented, according to other embodiments, with an automatic cashier.

According to one example, an automatic cashier comprises an optical scanner 14 adapted to scan items. In the present case, the user may use the optical scanner 14 to scan the code. Then, the process will continue accordingly.

According to another example, an automatic cashier may be based on a radio detection of the items, such as, for example, through radio-frequency identification (RFID). The automatic cashier comprises an interface allowing the user to seize information. In this case, the interface is configured to allow the user to seize their code.

According to yet another example, an automatic cashier may be directly integrated in the mobile phone 7 of the user. In particular, the mobile phone 7 may include an integrated payment module. In this case, the automatic cashier application on the mobile phone 7 of the user may offer a system to the user to seize their code. Even, the automatic cashier application may communicate directly with the event application program of the mobile phone 7 of the user to get the code therefrom. Hence, in this example, the communication module 11 of the mobile phone, adapted to communicate the code, may comprise any suitable system adapted to communicate the code directly to a remote computerized system, such as through wireless near-field communication.

The above examples disclose adding the event-related information to the receipt to be printed. However, the invention is compatible with non-printed receipts. In such case, the non-printed receipt, bearing the event-related information, will be held, registered and transmitted in digital format, for example to the mobile phone of the user. Hence, a printer 16, according to some embodiments of the invention, may encompass a system to list all relevant data in receipt format.

Although the above example feature a barcode image of the code held by the user on his mobile phone, one may consider, alternately, a code received by the user through a short messaging system, if the cashier comprises suitable means for seizing the code, or a code received by paper, either comprising an image or an alpha-numeric code.

The above examples are provided for a single event. However, a plurality of events may be running in parallel at some points of time. A given event may be associated with an interval of time, a group of items, a group of points-of-sale, ... The event server may thus be programmed to recognize which event is associated with the received data, and to operate the determination accordingly.

### Configuration of a new event

When a new event is started, it will be necessary to: create a new web-page enabling users to generate codes, amend the code-generating module to generate codes associated with this new event, amend virtual sorters across the participating points-of-sale to make them able to recognize codes related to this new event, and amend the event server to operate this new event. Further, the new event is associated with an event period defined by an event start date and an event end date.

### Termination of the event

When the event end date is reached, event-related data in the database is suppressed.

Alternately, an event might be terminated in other circumstances than reaching an event end date. For example, an event might be terminated once a predetermined number of a predefined outcome has been reached, or once a pre-defined amount of reward has been awarded.

### References

code-generating computerized module 1
personal computer 2
internet network 3
website 4
Database 5
Communication module 6
Mobile phone 7
Communication module 8
Processor 9
Memory 10
Communication module 11
Check-out system 12
Shop 13
Optical scanner 14
Registration desk 15
Printer 16
Virtual sorter 17
Event server 18
Central information desk 19
final acquisition system 20
additional device 21
cashier 22
user 23

## Claims

1. Computerized system comprising:
- a code-generating computerized module (1) adapted to generate codes each comprising at least a participation code,
- a communication computerized module (6) adapted to send a code generated by the code-generating computerized module (1) to a respective remote personal handheld computerized device (7), the remote personal handheld computerized device (7) comprising a communication computerized module (11) adapted to communicate the code,
- a resident computerized sorter (17) adapted
• to receive from a registration desk (15) of a check-out computerized system (12) a list of data comprising at least one item-related data,
• to determine eligibility to a computerized event based on the detection at least of the participation code in the list of data, and
• to operate a computerized decision-module by which:
+ upon non-retrieval by the computerized sorter (17) of the participation code in the list of data, sending the list of data to a printer (16),
+ upon retrieval by the computerized sorter (17) of the participation code in the list of data, sending at least participation code-related data to a remote event server(18), receiving event-related data for the respective list of data from the remote event server(18), and sending the list of data and the event-related data to a printer (16);
- an event server (18)adapted
• to receive at least the participation code-related data from a computerized sorter(17),
• to operate a random-based determination for the list of data to generate a respective event-related data,
• to send to the computerized sorter (17) said event-related data associated to the list of data.

2. Computerized system according to claim 1, wherein the communication computerized module (11) of the personal handheld computerized device (7) adapted to communicate the code is a display.

3. Computerized system according to claim 1 or 2, wherein the sorter (17) sends at least an item-related data of the list of data to a remote event server (18), further to the participation-code related data, and wherein the event server (18) is adapted to receive at least the item-related data from a computerized sorter (17).

4. Computerized system according to claim 1 or 3, wherein the event server (18) determines eligibility to a computerized event based on detection of a pre-defined further data in the list of data, and optionally where the pre-defined further data comprises one or more predefined item-related data.

5. Computerized system according to any of claims 1 to 4, wherein the code further comprises a content code, and wherein the event server (18) is adapted to operate the random-based event based also on the content code.

6. Computerized system according to any of claims 1 to 5, wherein the resident computerized sorter (17) is adapted to send to the remote event server (18) an identification of the resident computerized sorter (17) and/or an identification of the personal handheld computerized device (7).

7. Computerized system according to any of claims 1 to 6, further comprising a check-out computerized system (12) adapted to communicate with the personal handheld computerized device (7) to get the participation code therefrom, to insert the participation code in the list of data, and to send the list of data with the inserted participation code to the resident computerized sorter (17).

8. Computerized system according to claim 7, wherein the check-out computerized system (12) comprises an optical scanner to get the participation code from the personal handheld computerized device.

9. Computerized system according to any of claims 1 to 8, wherein the code-generating module (1) is adapted to upload user identification data in a database (5), wherein the event server (18) operates the random-based event based at least on the database (5).

10. Computerized system according to any of claims 1 to 9, further comprising a printer (16) adapted to either print the list of data or the list of data and the event-related data.

11. Computerized system according to any of claims 1 to 10, further comprising a final acquisition system (20) adapted to detect the event-related data on a print-out from the printer (16).

12. Computerized process comprising:
- a code-generating computerized module (1) generates codes each comprising at least a participation code,
- a communication computerized module (6) sends a code generated by the code-generating computerized module (1) to a respective remote personal handheld computerized device (7),
- a communication computerized module (11) of the remote personal handheld computerized device (7) communicates the code to a check-out computerized system (12),
- a resident computerized sorter (17) receives from the check-out computerized system (12) a list of data comprising at least one item-related data, determines eligibility to a computerized event based on the detection at least of the participation code in the list of data, and operates a computerized decision-tree by which:
+ upon non-retrieval by the computerized sorter (17) of the participation code in the list of data, the resident computerized sorter (17) sends the list of data to a printer,
+ upon retrieval by the computerized sorter (17) of the participation code in the list of data, the resident computerized sorter (17) sends at least participation code-related data to a remote event server (18),
- an event server (18) receives at least the participation code-related data from the computerized sorter (17), operates a random-based determination for the list of data to generate a respective event-related data, and sends to the computerized sorter (17) said event-related data associated to the list of data,
- the computerized sorter (17) receives event-related data for the respective list of data from the remote event server (18), and sends the list of data and the event-related data to a printer (16).

13. Set of computer programs comprising instructions which, when the computer programs are executed by computers in a distributed environment, cause the computers to carry out the process of claim 12.
